# EUROPEAN PATENT APPLICATION

(11) **EP 0 600 163 A2**
(43) Date of publication of application: **08.06.1994**
(21) Application number: 93113766.5
(22) Date of filing: 27.08.1993
(51) Int. Cl.: B60K 23/06, F16D 41/22, B60K 17/26

(54) **Coasting device for vehicle**

(30) Priority: 30.11.1992 CN 92240879; 18.02.1993 CN 93101939
(71) Applicant: Shi, Qiwen, Tangyin County, Henan (CN)
(72) Inventor: Shi, Qiwen, Tangyin County, Henan (CN)
(74) Representative: Grünecker, Kinkeldey, Stockmair & Schwanhäusser Anwaltssozietät

(57) **Abstract**

The present invention is a type of coasting device for vehicle provided between a half shaft (1) and a drive hub (2) with external thread (3). A forward running nut (12) and an astern running nut (11), each with a cone-surface, are mounted on the threaded section of the drive hub (2). An outer casing (16) is coaxially provided at the outer of the drive hub, the internal cone-surfaces of the casing matching the external cone-surfaces of the two nuts to form an overrunning clutch and a self-locking device. Thus, the inertia energy of vehicles can be sufficiently utilized, the relief of harmful gases from engines reduced, the wear of machine parts decreased and the driver's labour eased.

## Description

The present invention relates to a type of coasting device for vehicle used to accomplish the relative rotating or running free between a driving wheel and a half shaft.

Undoubtedly, it is a nice way for fuel-saving to coast forward by inertia when a vehicle travels at a certain speed. However, automotive drive is mostly constant-engaging one at present, therefore, when the rotation speed of the half shaft is lower than that of the drive wheel, not only the coasting resistance to the vehicle is increased, but also the engine is activated inversely to rotate idly with high speed, thus making the inertia energy of the vehicle unable to be utilized completely and increasing the wear of operating parts.

The applicant filed an application for a patent for utility model entitled "A coasting device with double cone-surfaces clutch for vehicle" on September 22, 1992 in China. The application which was granted the patent right on June 26, 1993 (Patent number ZL92220827. 1) is cited here as a reference.

The cited patent disclosed a type of coasting device with double cone-surfaces clutch for vehicle which accomplishes overrunning clutching by the coasting device which comprises a forward cone-surface for forward running and a cone-surface for astern running.

The cited patent has many defects. For example, the reacting speed of this coasting device is slow and its internal and external gears which are used as a locking device are easily to be broken. While overrunning clutching, collisions between the cone-surface for astern running and its matched rear cone-surface may be happened since the double cone-surfaces are formed an integral part, resuting in disturbing the coasting and having negative effect to the coasting, even unable to travel normally; furthermore, it is with complex structure and unsafe operation.

The present invention discloses a type of coasting device for vehicle. The object of the present invention is to make the half shaft and the drive hub separated automatically to accomplish coasting by means of the coasting device when rotation speed of the half shaft of the vehicle is lower than that of the drive hub. The half shaft and the drive hub will be engaged automatically by means of the coasting device so as to transmit the power from the half shaft to the drive hub when the rotation speed of the half shaft is higher than that of the drive hub.

The vehicle coasting device of the present invention comprises: a half shaft; a drive hub with external thread being coaxially provided outside of the half shaft; an overrunning clutch having a forward running nut and an astern running nut, both match with the external thread and have frustum shape with cone-surfaces, and the tapered cone-surfaces of the nuts are oppositely disposed, and the nuts are threaded on the threaded section of the drive hub; a retainer ring provided between the two nuts; an outer casing coaxially provided outside of the drive hub with an annular chamber formed inside of the casing, the chamber being with internal cone shapes to match the cone-surfaces of the two nuts; said device also includes a locking device provided outside the astern running nut.

The outer casing comprises a first and a second cylinder both having internal cone-surfaces, and being rigidly connected with a middle cylinder, and forming a internal chamber with a cylinder-shape in the middle and cone shapes at both ends. When the half shaft is rotated by the engine, the drive hub rigidly connected with the half shaft will be rotated; the forward running nut, which matches the external thread on the drive hub, will approach the internal cone-surface of the second cylinder until lock up with the internal cone-surface so as to transfer the power to the outer casing; and the vehicle wheels attached to the outer casing will be rotated together. When the rotation speed of the engine is decelarated, that of the half shaft will be decelarated too, the vehicle wheels will continue to run forward by the inertia force; the forward running nut, will be rotated back to approach the retainer ring along the thread to accomplish the separation from the internal cone-surface of the second cylinder of the outer casing and achieve automaticially coasting.

The locking device comprises a pair of brake-shoes provided with compression springs outside them. The locking device is provided outside the astern running nut to make the brake-shoes grasp the astern running nut. Provided at the shoe tip of one brake-shoe is a cam mechanism, in which the cam can be rotated by an electro-magnetic device to release or lockup the brake-shoe; provided also at the shoe tip of the other brake-shoe is a cam mechanism, in which the cam can be rotated by a centrifugal weight device to release or lockup the other brake-shoe.

Referring to the attached Figures, the present invention will be further described through a preferred embodiment as follows.
Figure 1 is a schematic assembly of a preferred embodiment of the present invention;
Figure 2 a schematic elevative view of the locking device;
Figure 3 is a schematic cross-sectional view along line A-A in Figure 2;
Figure 4 is a schematic right-side view of the device in Figure 2.

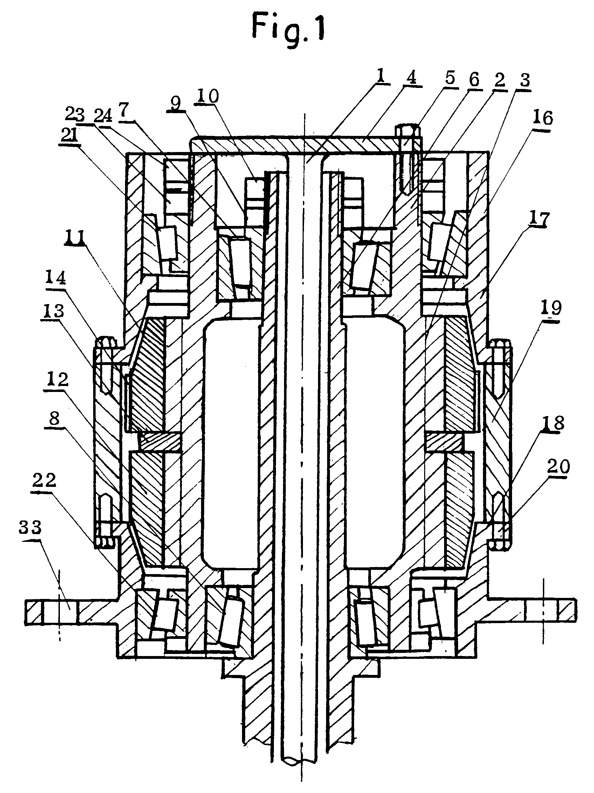

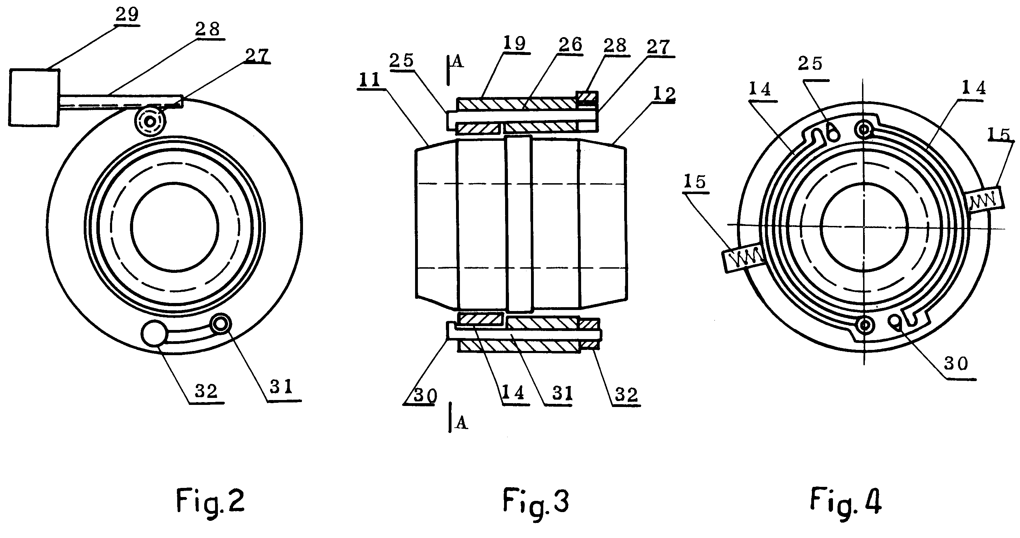

The embodiment shown in Figure 1 is a coasting device fairly suitable for Dong Feng series automobiles. A drive hub 2 and a half shaft 1 are rigidly connected by bolts 5 through flange 4. Provided between drive hub 2 and half shaft 1 is a shaft bushing 6 and provided between drive hub 2 and shaft bushing 6 are bearings 7 and 8, the bearing 7 being locked up by nuts 9 and 10. External thread 3 is provided on the outside of drive hub 2, an astern running nut 11 and a forward running nut 12 match with the external thread on the drive hub, and the two nuts are spaced by retainer ring 13. Provided on the outer of the astern running nut 11 is a pair of brake-shoes 14. Outer casing 16 is coaxially provided on the outer of the drive hub, provided on the outer casing being adjustable springs 15 against the brake-shoes. By means of the pressure from springs 15, the brake-shoes will grasp astern running nut 11 (lockup state). Outer casing 16 is assembled by a first cylinder 17 with an internal cone surface, a second cylinder 18 with an internal cone surface and a middle cylinder 19, all of them being rigidly conncted by bolts 20. Outer casing 16 is connected with the wheel rib and the brake hub by bolts (not shown) through holes 33. Referring to Figures 2, 3 and 4, brake -shoes 14 are mounted on the outer of astern running nut 11 and will grasp astern running nut 11 (lockup state) under the pressure from springs 15. The pressure of springs 15 is adjustable. Provided at the shoe tip of one brake -shoe 14 is cam 25, which is mounted on one end of cam shaft 26; a pinion 27, engaged with a rack 28, is mounted on the other end of the cam shaft. Electro-magnetic device 29 controls rack 8 to make it move reciprocally, thus rotating the cam to release or lock the brake-shoes. Provided at the shoe tip of the other brake-shoe is a cam 30, which is mounted on a cam shaft 31; a centrifugal weight 32 is mounted on the other end of the cam shaft. Under the action of the rotating outer casing 16, the centrifugal weight moves outwardly; the movement of the centrifugal weight can bring the cam shaft into rotation, thus making the brake-shoes release or close (lockup or releasing).

When the power for forward running transfers to drive hub 2 through half shaft 1, the drive hub 2 rotates to bring the forward running nut 12 into motion towards the internal cone-surface of the second cylinder 18 along the thread until the cone-surface of the nut 12 locks on the internal cone-surface of the second cylinder 18 to force the outer casing 16 to rotate, thus making the wheels run and the vehicle runs forward. When the operator stops fuel-supplying and the speed of half shaft 1 is lower than that of outer casing 16, by means of the rotation inertia of outer casing 16, forward running nut 12 wil retract back (that is, in the direction to the retainer ring) along the thread, thus drive hub 2 will start running free to fulfill the overrunning process of the overrunning clutch. When the speed of half shaft 1 increases once again, forward running nut 12 will be brought into motion towards the internal cone-surface of the second cylinder 18 to repeat above -mentioned locking process.

While astern running, half shaft 1 oppositely rotates to bring astern running nut 11 into motion towards the internal cone-surface of the first cylinder 17 until the cone-surface of the nut 11 locks on the internal cone-surface to force outer casing 16 to rotate oppositely, thus fulfill the astern running.

When it is needed to coast while forward running, brake-shoes 14 at the outer of astern running nut 11 must be completely released. At this time, one brake-shoe will be released through rack 28, pinion 27 and cam mechanism 25 and 26, under the activation of electro-magnetic device 29. The close-up of electro-magnetic device 29 is controlled by the operator. The other brake-shoe will be released under the action of centrifugal weight 32. In this way, the interference that outer casing 16 actuates astern running nut 11 moving towards the internal cone-surface of the first cylinder 17 and lock on it will be avoided.

When it is not allowed to coasting in rainy or snowy weather, the pressure of springs 15 can be adjusted to cause the centrifugal force of centrifugal weight 32 to be lower than the pressure of springs 15, thus making brake-shoes 14 tightly grasp astern running nut 11. In this case, it is the same as if the coasting device had not been mounted, so the locking purpose can be achieved and travel safety guaranteed.

When vehicles are provided with the coasting device of the present invention, the inertia energy of automobiles will be sufficiently utilized. Experiment data have shown that fuel can be saved by more than 25%, carbon monooxide relief reduced, mechanical wear significantly decreased and driver's labour eased.

While a preferred embodiments of the present invention has been discribed in detail, it is to be understood that various modifications may be adopted without departing from the spirit of the invention or scope of the following claims.

## Claims

1. A type of coasting device for vehicle comprising: a half shaft, a drive hub with external thread, the hub coaxially provided at the outer of said half shaft; an overrunning clutch which including a forward running nut an an astern running nut, both of them matching said external thread and being of frustum shapes with cone-surface, and the tapered cone-surfaces of said two nuts being oppositely disposed, and the nuts being threaded on the threaded section of the drive hub; a retainer ring provided between the two nuts; and an outer casing coaxially provided outside the drive hub, with an annular chamber formed said chamber being with cone shapes to match said cone-surfaces of the two nuts; a locking device provided outside the astern running nut.

2. According to the coasting device for vehicle described in claim 1 wherein the outer casing comprises a first cylinder with an internal cone-surface; a second cylinder with an internal cone-surface; a middle cylinder provided between the first and the second cylinders and rigidly connected with them; thus forming a chamber with two internal cone-surfaces at each end and a cylinder internal surface in the middle.

3. Accordin to the coasting device for vehicle described in claim 1 wherein the locking device comprises a pair of brake-shoes provided inside said middle cylinder; and a spring device provided outside the brake-shoes, making the brake-shoes grasp the astern running nut, that is, achieve the lockup state, by means of the spring pressure.

4. According to the coasting device for vehicle described in claim 1, said locking device compriese a pair of brake-shoes and a first cam mechanism having a cam, a cam shaft and an elecro-magnetic drive device, said cam being provided at the position of the shoe tip of one brake-shoe and being rotated to release or lock up the brake-shoe under the operation of said electro-magnetic device.

5. According to the locking device described in claim 4, further comprising a second cam mechanism having a cam, a cam shaft and a centrifugal weight, said cam being provided at the position of shoe tip of the other brake-shoe and being mounted on the cam shaft, and the centrifugal weight being mounted on the other end of the cam shaft; the movement of the centrifugal weight will bring the cam shaft into rotation to release or lock up this brake-shoe.

6. According to the coasting device for vehicle described in claim 3, the elastic pressure of the spring device can be adjusted.
